# EUROPÄISCHE PATENTSCHRIFT

(11) **EP 3 495 766 B1**
(45) Veröffentlichungstag und Bekanntmachung des Hinweises auf die Patenterteilung: **04.01.2023**
(21) Anmeldenummer: 17205704.4
(22) Anmeldetag: 06.12.2017
(51) Int. Cl.: G01B 9/02055, G01B 9/02015, G01J 3/45, G01J 3/02, G02B 27/10

(54) **REFERENZINTERFEROMETER UND VERFAHREN ZUR BESTIMMUNG EINER OPTISCHEN WEGLÄNGENÄNDERUNG**
REFERENCE INTERFEROMETER AND METHOD FOR DETERMINING AN OPTICAL PATH LENGTH CHANGE
INTERFÉROMÈTRE DE RÉFÉRENCE ET PROCÉDÉ DE DÉTERMINATION D'UNE MODIFICATION DE LONGUEUR D'UN TRAJET OPTIQUE

(43) Veröffentlichungstag der Anmeldung: 12.06.2019
(73) Patentinhaber: CTR Carinthian Tech Research AG, 9524 Villach-St. Magdalen (AT); METROHM AG, 9100 Herisau (CH)
(72) Erfinder: AUBÖCK, Gerald, 9500 Villach (AT); KENDA, Andreas, 9020 Klagenfurt (AT); GISLER, Thomas, 9113 Degersheim (CH)
(74) Vertreter: Wirnsberger & Lerchbaum Patentanwälte OG

(56) Entgegenhaltungen:
- WO-A1-2008/019937
- DE-A1- 2 456 649
- DE-A1- 10 308 006
- DE-T2- 3 873 563
- DE-T2- 69 014 205
- US-A1- 2007 024 860

## Beschreibung

Die Erfindung betrifft ein Referenzinterferometer zur Bestimmung einer optischen Weglängenänderung, insbesondere einer relativen optischen Weglängenänderung in Interferometerarmen, umfassend einen Strahlteiler und eine Laserlichtquelle.

Weiter betrifft die Erfindung eine Verwendung eines solchen Referenzinterferometers.

Des Weiteren betrifft die Erfindung ein Interferometer mit einem solchen Referenzinterferometer.

Darüber hinaus betrifft die Erfindung ein Spektrometer, insbesondere ein Nah-Infrarot-Spektrometer.

Ferner betrifft die Erfindung ein Verfahren zur Bestimmung einer optischen Weglängenänderung, insbesondere einer relativen optischen Weglängenänderung in Interferometerarmen, wobei von einer Laserlichtquelle ein Lichtstrahl, insbesondere ein Referenzstrahl auf einen Strahlteiler gestrahlt wird.

Zweistrahlinterferometer, wie diese beispielsweise in Fourier-Transformationsspektrometern eingesetzt werden, benötigen in der Regel ein Referenzinterferometer zur Messung einer relativen optischen Weglängenänderung eines Lichtstrahles in den Interferometerarmen.

Zur Messung einer relativen optischen Weglängenänderung wird oftmals eine sogenannte Quadraturdetektion verwendet, um neben einem Betrag der optischen Weglängenänderung in den Interferometerarmen auch dessen Vorzeichen erfassen zu können. Quadraturdetektion wird in vielen kommerziell erhältlichen Zweistrahlinterferometern verwendet. Hierfür werden zwei Referenzinterferometer realisiert, wobei sich ein optischer Weglängenunterschied in beiden Interferometerarmen um etwa λ/4 unterscheidet. Die Messung von beiden Interferenzsignalen erlaubt neben einer Bestimmung des Betrages der optischen Weglängenänderung zusätzlich auch die Bestimmung eines Vorzeichens derselben. Eine Quadraturdetektion kann beispielsweise durch zwei räumlich getrennte Interferometer realisiert werden.

Eine andere Realisierungsmöglichkeit ist ein Einbringen eines λ/4-Plättchens in einen Referenzlaserstrahl in einem Interferometerarm, wodurch sich ein passender optischer Weglängenunterschied für x- und y-polarisiertes bzw. senkrecht und parallel polarisiertes Licht ergibt. Eine Detektion der Laserstrahlen erfolgt dann über einen Polarisationsstrahlteiler und zwei Detektoren.

US 2007/024860 A1 beschreibt ein Absolutinterferometer mit Quadraturdetektion, das ein Prisma mit interner Totalreflexion enthält.

Es gestaltet sich jedoch als schwierig, mit aus dem Stand der Technik bekannten Verfahren bzw. Vorrichtungen eine einfache Quadraturdetektion insbesondere in einem monolithischen Interferometeraufbau zu realisieren. Es ist bei einem monolithischen Interferometer nämlich überaus schwierig, ein retardierendes Element, wie ein λ/4-Plättchen in einem Arm des Interferometers zu integrieren.

Hier setzt die Erfindung an. Aufgabe der Erfindung ist es, ein Referenzinterferometer der eingangs genannten Art anzugeben, mit welchem eine optische Weglängenänderung einfach und effizient bestimmbar ist und welches sich kompakt und robust ausbilden lässt.

Weiter ist es ein Ziel, eine Verwendung eines solchen Referenzinterferometers anzugeben.

Ein weiteres Ziel ist es, ein Interferometer mit einem solchen Referenzinterferometer anzugeben.

Darüber hinaus ist es Ziel der Erfindung, ein Spektrometer anzugeben.

Ferner ist es ein Ziel, ein Verfahren der eingangs genannten Art anzugeben, mit welchem eine optische Weglängenänderung einfach und effizient bestimmt werden kann.

Die Aufgabe wird erfindungsgemäß dadurch gelöst, dass bei einem Referenzinterferometer der eingangs genannten Art der Strahlteiler derart ausgebildet ist, dass ein Lichtstrahl der Laserlichtquelle mittels totaler interner Reflexion über eine erste Seitenfläche, insbesondere eine Oberseite, und eine zweite Seitenfläche, insbesondere eine Unterseite, des Strahlteilers führbar ist.

Ein mit der Erfindung erzielter Vorteil ist insbesondere darin zu sehen, dass durch die interne Totalreflexion an einer Grenzfläche eine Phasenverschiebung zwischen x- und y-polarisiertem bzw. senkrecht und parallel polarisiertem Licht entsteht, wobei die Phasenverschiebung von einer Brechzahl des Strahlteilers und einem Auftreffwinkel des Lichtstrahles abhängt. Dadurch ist ein einfaches sowie robustes Referenzinterferometer geschaffen, welches darüber hinaus produktionstechnisch gut bzw. mit relativ wenig Aufwand realisierbar ist. Die Funktionalisierung der Totalreflexion erlaubt sowohl eine besonders geeignete Strahlführung im Referenzinterferometer als auch eine einfache Realisierung einer für eine Quadraturdetektion notwendigen Polarisationsmanipulation. Der Lichtstrahl ist insbesondere als Laserlichtstrahl ausgebildet, welcher von der Laserlichtquelle emittiert wird.

Erfindungsgemäß sind zumindest die Oberseite und/oder die Unterseite des Strahlteilers zumindest teilweise mit einer Beschichtung beschichtet . Es könnten jedoch auch die Oberseite oder die Unterseite jeweils oder gemeinsam vollständig mit demselben Material beschichtet sein, wobei die Retardierfunktion auf einem Interferometerarm nur dann erzielt wird, wenn sich die Beschichtungen in Brechzahl oder Dicke unterscheiden. Durch eine gezielte Wahl von Brechzahl und Dicke der Beschichtung kann bei einem gegebenen Auftreffwinkel des Lichtstrahls der Laserlichtquelle eine gewünschte Phasenverschiebung zwischen x- und y-polarisiertem Licht erzielt werden.

Insbesondere ist es vorteilhaft, wenn die Brechzahl und die Dicke der Beschichtung derart gewählt sind, dass bei einem mittels totaler interner Reflexion reflektierten Lichtstrahl der Laserlichtquelle eine Phasenverschiebung um λ/4 ± λ/10, vorzugsweise um λ/4 ± λ/20, erzielbar ist. Somit ist ein im Stand der Technik verwendetes λ/4-Plättchen nicht mehr notwendig. Der Strahlteiler ist mit einer einfachen Schicht geeigneter Brechzahl beschichtet, wodurch eine Größe einer Phasenverschiebung kontrollierbar ist. Beispielsweise ist der Strahlteiler mit einer Hafniumdioxidschicht beschichtet, wobei die Hafniumdioxidschicht eine Brechzahl von etwa 1,82 aufweist. Eine Phasenverschiebung von λ/4 ist beispielsweise mit einer Schichtdicke von etwa 60 nm und/oder etwa 120 nm bei einer Laserwellenlänge von 638 nm erreichbar. Durch eine Anpassung der Schichtdicke und/oder eines Schichtmaterials kann nahezu jede erwünschte Phasenverschiebung für beliebige Substratmaterialien, Einfallswinkel und Laserwellenlängen erreicht werden, was zahlreiche Anwendungsmöglichkeiten eines erfindungsgemäßen Referenzinterferometers eröffnet.

Weitere mögliche Beschichtungsmaterialien sind Indium-Zinn-Oxid, Titandioxid, Nb₂O₃, Ta₂O₃, ZrO₂, Sc₂O₃, Y₂O₃, sowie Mischoxide der genannten Oxide untereinander und/oder mit SiO₂.

Es ist vorteilhaft, wenn der Strahlteiler als Parallelepiped, insbesondere als gerades Vierecksprisma, vorzugsweise als Quader ausgebildet ist. Dadurch ist eine besonders einfache Realisierung des Referenzinterferometers gegeben bzw. möglich. Ein quaderförmiger Strahlteiler kann beispielsweise 20 mm bis 30 mm mal 20 mm bis 30 mm mal 5 mm bis 10 mm, bevorzugt 22 mm bis 28 mm mal 22 mm bis 28 mm mal 6 mm bis 8 mm, insbesondere etwa 25 mm mal 25 mm mal 7 mm, groß sein. Alternativ dazu kann der quaderförmige Strahlteiler gleiche Seitenlängen aufweisen und somit als Würfel ausgebildet sein.

Vorteilhaft ist es, wenn zumindest ein Detektor vorgesehen ist. Insbesondere kann es günstig sein, wenn eine Detektion des Lichtstrahles der Laserlichtquelle als Referenzstrahl mit einem Polarisationsstrahlteiler und zwei Detektoren erfolgt. Der zumindest eine Detektor kann insbesondere als Strahlungsdetektor, vorzugsweise als eine Fotozelle, Fotodiode oder ein Fotomultiplier, ausgebildet sein.

Es ist von Vorteil, wenn die Laserlichtquelle so positioniert ist, sodass der Lichtstrahl in einem von 90° verschiedenen Winkel zur Flächennormalen auf den Strahlteiler trifft. Dadurch kann eine einfache und kompakte Bauweise realisiert werden und der Lichtstrahl trifft in einem für totale interne Reflektion optimalen Winkel auf den Strahlteiler.

Die Laserlichtquelle kann ein Diodenlaser, insbesondere ein Distributed-Feedback-Laser (DFB-Laser), ein Distributed-Bragg-Reflector-Laser (DBR-Laser) oder ein Vertical-Cavity-Surface-Emitting-Laser (VCSEL) sein. Dabei handelt es sich um bevorzugte Laserlichtquellen, die sich gegenüber einem herkömmlichen Laser, beispielsweise einem HeNe-Laser, durch eine kompakte Bauweise, einen niedrigen Energieverbrauch und eine hohe Stabilität der Wellenlänge gegen Temperaturvariationen auszeichnen.

Unter einem Distributed-Feedback-Laser (DFB-Laser) wird im vorliegenden Zusammenhang eine Laserdiode verstanden, deren aktives Medium derart strukturiert ist, dass der Brechungsindex entlang einer optischen Achse periodisch strukturiert ist.

Unter Distributed-Bragg-Reflector-Lasern (DBR-Lasern) werden im vorliegenden Zusammenhang Laserdioden verstanden, deren aktives Medium an einem Ende durch einen Bragg-Spiegel (engl. *Distributed Bragg Reflector,* DBR) begrenzt ist und bei dem an einem anderen Ende ein herkömmlicher Auskoppelspiegel angebracht ist.

Unter Oberflächenemitter-Laserdioden (engl.: *vertical-cavity surface-emitting laser,* VCSEL) werden im vorliegenden Zusammenhang Laserdioden verstanden, bei welchen das Licht senkrecht zur Ebene eines Halbleiterchips abgestrahlt wird. Ein Laserresonator wird dabei durch zwei parallel zur Ebene des Wafer angeordnete Bragg-Spiegel gebildet, zwischen welchen das Lasermedium eingebettet ist.

Allerdings kann es sich bei der Laserlichtquelle auch um einen Diodenlaser anderer Bauart handeln. Je nach Art des Diodenlasers kann es vorteilhaft sein, wenn die Wellenlänge des von diesem bereitgestellten Lichtes durch ein bandenbegrenzendes Element, insbesondere durch ein Volumen-Bragg-Gitter (VBG) stabilisiert ist. Dies verleiht der Laserlichtquelle insbesondere eine höhere Stabilität der Laserwellenlänge gegen Temperaturvariationen.

Eine Verwendung eines erfindungsgemäßen Referenzinterferometers erfolgt mit Vorteil zur Überprüfung einer optischen Weglängenänderung in Interferometerarmen.

Das weitere Ziel wird mit einem Interferometer mit einem erfindungsgemäßen Referenzinterferometer zur Überprüfung einer optischen Weglängenänderung in Interferometerarmen, insbesondere umfassend eine Lichtquelle für einen Messstrahl und mehrere optische Elemente, erreicht.

Mit Vorteil sind der Messstrahl und der Lichtstrahl der Laserlichtquelle durch denselben Strahlteiler führbar, wobei der Lichtstrahl der Laserlichtquelle einen Referenzstrahl darstellt.

Somit ist eine Quadraturdetektion im Interferometer besonders einfach möglich, da der Messstrahl und der Referenzstrahl durch denselben Strahlteiler geführt werden. Der Referenzstrahl ist über interne Totalreflexion an einer Oberseite und Unterseite des Strahlteilers geführt. Diese Geometrie erlaubt eine besonders einfache und kompakte Bauweise des Interferometers sowie eine optimal kleine Verkippung des Referenzstrahles bei gegebener Größe.

Günstig ist es, wenn das Interferometer als Zweistrahlinterferometer ausgebildet ist.

Besonders bevorzugt ist dieses als Fourier-Transformationsspektrometer oder als monolithisches Michelson-Interferometer ausgebildet.

Zweckmäßig ist es, wenn das Referenzinterferometer zur Quadraturdetektion ausgebildet ist, um eine relative optische Weglängenänderung in den Interferometerarmen des Interferometers zu messen.

Das weitere Ziel wird mit einem Spektrometer, insbesondere Nah-Infrarot-Spektrometer, mit einem erfindungsgemäßen Interferometer erreicht.

Das verfahrensmäßige Ziel wird erreicht, wenn bei einem Verfahren der eingangs genannten Art der Lichtstrahl der Laserlichtquelle als Referenzstrahl mittels totaler interner Reflexion über eine Oberseite und eine Unterseite, des Strahlteilers geführt wird.

Ein damit erzielter Vorteil ist insbesondere darin zu sehen, dass über die totale interne Reflexion bzw. interne Totalreflexion an der ersten Seitenfläche und der zweiten Seitenfläche, insbesondere einer Oberseite und Unterseite, des Strahlteilers eine optische Weglängenänderung des Messstrahles besonders einfach und effizient gemessen werden kann. Ferner kann das Interferometer sehr kompakt, beispielsweise monolithisch gebaut werden, was hinsichtlich der mechanischen Robustheit Vorteile bringt. Darüber hinaus wird der Referenzstrahl nur sehr wenig verkippt, wodurch insbesondere bei einer kompakten Bauweise eines Interferometers die grundsätzlich damit verbundenen Nachteile überwunden sind.

Es ist von Vorteil, wenn zusätzlich ein Messstrahl durch denselben Strahlteiler geführt wird. Der Messstrahl und der Referenzstrahl können insbesondere in zwei unterschiedlichen Winkeln auf den Strahlteiler bzw. eine Flächennormale des Strahlteilers geführt werden.

Erfindungsgemäß wird eine Polarisation des Referenzstrahles verändert. Hierfür wird der Strahlteiler zumindest teilweise beschichtet, wobei mithilfe einer einfachen Schicht geeigneter Brechzahl eine Größe einer Phasenverschiebung kontrolliert wird.

Insbesondere bei einem als Quader oder Würfel ausgebildeten Strahlteiler ist es vorteilhaft, wenn der Referenzstrahl und der Messstrahl in unterschiedlichen Winkeln auf den Strahlteiler geführt werden. Insbesondere wird der Messstrahl mit einem Einfallswinkel von weniger als 7°, vorzugsweise weniger als 3°, bevorzugt weniger als 1°, zur Flächennormale des Strahlteilers, vornehmlich zur Flächennormale auf eine Eingangsseite des Strahlteilers, geführt. In einer bevorzugten Ausführungsform wird der Messstrahl mit einem Einfallswinkel von etwa 0° zur Flächennormale des Strahlteilers geführt. Im Unterschied dazu wird der Referenzstrahl von oben auf den Strahlteiler geführt, beispielsweise mit einem Einfallswinkel von 30° bis 89°, vorzugsweise 50° bis 85°, bevorzugt 65° bis 80°, zur Flächennormalen des Strahlteilers. Je nach Ausführung ist allerdings auch ein Einfallswinkel von 65° bis 88°, vorzugsweise von 70° bis 83°, bevorzugt von 75° bis 78° vorteilhaft. In einer besonders bevorzugten Ausführungsform wird der Referenzstrahl mit einem Einfallswinkel von 76,5° zur Flächennormale des Strahlteilers geführt.

Vorteilhaft ist es weiter, wenn der Referenzstrahl und der Messstrahl von zumindest einem Detektor erfasst werden. Insbesondere sind zwei Detektoren vorgesehen, wobei der Referenzstrahl und der Messstrahl von jeweils einem Detektor erfasst werden. Zudem kann es günstig sein, wenn für den als Referenzstrahl ausgebildeten Lichtstrahl ein Polarisationsstrahlteiler vor dem Detektor angeordnet ist. In diesem Fall sind insgesamt zumindest drei Detektoren erforderlich.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
Fig. 1 eine aus dem Stand der Technik bekannte Vorrichtung zur Quadraturdetektion;
Fig. 2 ein erfindungsgemäßes Interferometer;
Fig. 3 eine schematische Darstellung eines erfindungsgemäßen Referenzinterferometers;
Fig. 4 eine Darstellung eines Strahlengangs durch einen Strahlteiler;
Fig. 5 eine weitere Ansicht eines Strahlengangs gemäß Fig. 4;
Fig. 6 eine schematische Darstellung einer Phasenverschiebung;
Fig. 7 eine Darstellung einer Differenz zwischen einer Phasenverschiebung für unterschiedlich polarisiertes Licht;
Fig. 8 Werte einer Phasenverschiebung;
Fig. 9 eine experimentelle Verifikation von simulierten Werten.

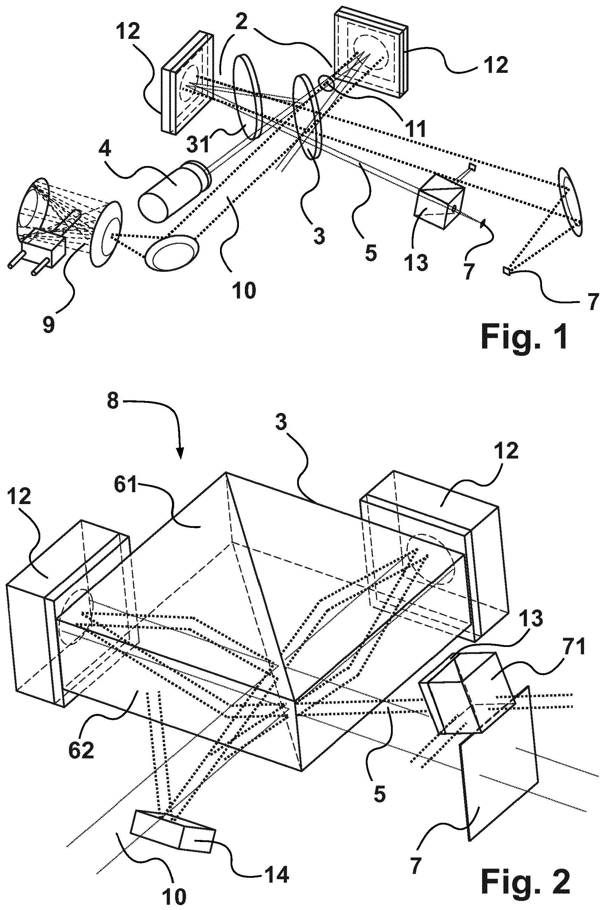

Fig. 1 zeigt eine aus dem Stand der Technik bekannte Vorrichtung zur Quadraturdetektion. Diese Vorrichtung umfasst ein Michelson-Interferometer mit einem Referenzinterferometer für eine konventionelle Quadraturdetektion. Weiter umfasst die Vorrichtung eine Laserlichtquelle 4 sowie eine weitere Lichtquelle 9. Ein als Referenzstrahl ausgebildeter Lichtstrahl 5 und ein Messstrahl 10 sind an einer Position eines λ/4-Plättchens 11 räumlich voneinander getrennt, wofür der Referenzstrahl verkippt ist. Diese Verkippung ist grundsätzlich mit Nachteilen behaftet, wobei die Verkippung insbesondere bei einer kompakten Bauweise eines Michelson-Interferometers mit kurzen Interferometerarmen 2 recht groß ist. Die Vorrichtung umfasst weitere optische Elemente wie einen Strahlteiler 3, Spiegel 12, Detektoren 7 und einen Polarisationsstrahlteiler 13. Um einen Wegunterschied daraus resultierend, dass der am Strahlteiler 3 reflektierte Strahl den Strahlteiler 3 nicht durchquert, zu kompensieren, weist die Vorrichtung ein Plättchen 31 auf, welches aus demselben Material und in derselben Dicke wie der Strahlteiler 3 ausgebildet ist.

In Fig. 2 ist ein erfindungsgemäßes Interferometer 8 mit einem erfindungsgemäßen Referenzinterferometer 1 gezeigt. Das Interferometer 8 ist als Michelson-Interferometer in monolithischer Bauweise ausgebildet. Das Referenzinterferometer 1 umfasst eine in Fig. 2 nicht dargestellte Laserlichtquelle 4, welche einen Lichtstrahl 5 emittiert. Darüber hinaus ist ein quaderförmiger Strahlteiler 3 vorgesehen. Das Interferometer 8 umfasst weiter eine in Fig. 2 nicht dargestellte Lichtquelle 9, welche einen Messstrahl 10 emittiert. Sowohl der Messstrahl 10 als auch der als Referenzstrahl ausgebildete Lichtstrahl 5 werden durch den Strahlteiler 3 geführt. Der Referenzstrahl kann mittels Spiegel 14 auf den Strahlteiler gelenkt sein. Ein Vorteil dieser Ausführung ist darin zu sehen, dass der Lichtstrahl 5 einfach justiert werden kann. Wie beschrieben kann vorgesehen sein, dass die Laserlichtquelle 4 an der Stelle des Spiegels 14 positioniert und gegenüber dem Messstrahl 10 verkippt ist. Weiter ist der Referenzstrahl mittels interner Totalreflexion über eine Oberseite 61 und Unterseite 62 des Strahlteilers 3 geführt. Die Oberseite 61 und/oder Unterseite 62 des Strahlteilers 3 ist beispielsweise mit Hafniumdioxid beschichtet. Die Beschichtung des Strahlteilers ersetzt das λ/4-Plättchen 11 einer bekannten Vorrichtung gemäß Fig. 1. Ferner umfasst das Interferometer 8 einen ersten Detektor 71 sowie einen zweiten Detektor 7 und einen Polarisationsstrahlteiler 13 zur Detektion des als Referenzstrahl ausgebildeten Lichtstrahles 5 und des Messstrahles 10, wobei der Polarisationsstrahlteiler 13 vor dem ersten Detektor 71 angeordnet ist, welcher zur Detektion des Referenzstrahles vorgesehen ist. Weiter kann es vorgesehen sein, dass Spiegel 12, insbesondere in z-Richtung bewegbare Spiegel 12, am Strahlteiler 3, insbesondere mittels direkt am Strahlteiler 3 aufgeklebten Spiegelgehäuses, montiert sind. Die Spiegel 12 sind als Mikrosystemtechnikkomponenten (MEMS-Komponenten) ausgebildet.

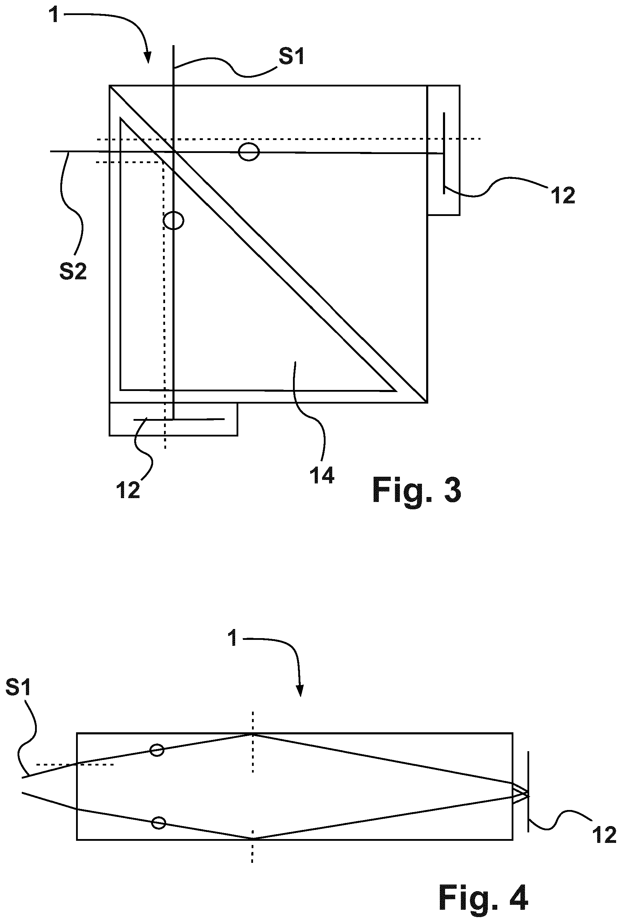

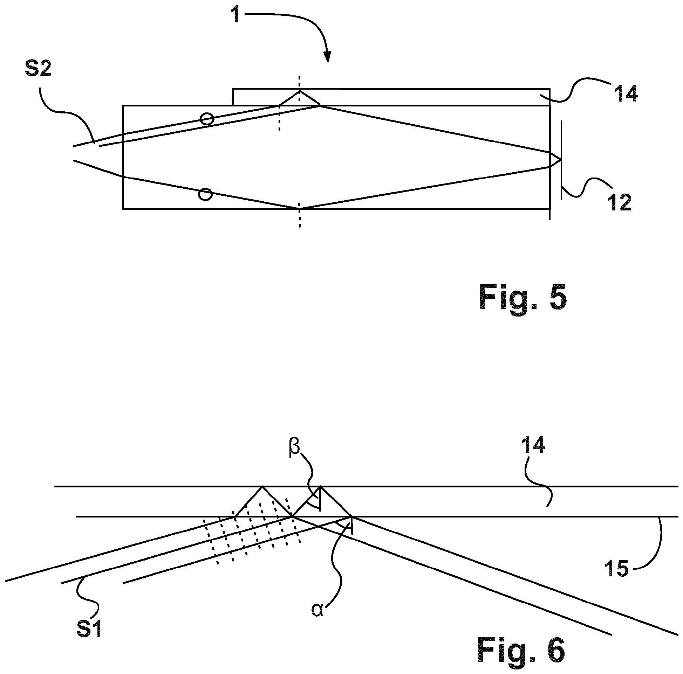

In Fig. 3 ist eine schematische Darstellung eines erfindungsgemäßen Referenzinterferometers 1 bzw. ein Grundriss eines Referenzinterferometers 1 gezeigt. Fig. 3 zeigt einen Strahlengang von zwei Strahlen S1, S2 durch den Strahlteiler 3, an dem zwei Spiegel 12, insbesondere Spiegel aufweisend die Möglichkeit in z-Richtung zu scannen, angeordnet sind. Der Strahlteiler 3 ist teilweise mit einer Hafniumdioxid-Schicht 14 beschichtet, welche eine Brechzahl von 1,82 bei einer Laserwellenlänge von 638 nm aufweist. Der Strahlteiler 3 selbst ist bevorzugt aus Quarzglas 15 mit einer Brechzahl von 1,46 ausgebildet. Fig. 4 und 5 zeigen jeweils eine Seitenansicht des Strahlteilers 3, wobei Fig. 4 eine Seitenansicht entlang einem Strahlengang eines ersten Strahles S1 und Fig. 5 eine Seitenansicht entlang einem Strahlengang eines zweiten Strahles S2 zeigt. Wie aus Fig. 5 ersichtlich, übernimmt die Hafniumdioxid-Schicht 14 die Funktion eines λ/4-Plättchens 11 gemäß Fig. 1.

Fig. 6 zeigt eine schematische Darstellung einer Phasenverschiebung über einen beschichteten Strahlteiler 3. Es ist ersichtlich, dass mit einer einfachen Schicht geeigneter Brechzahl eine Größe einer Phasenverschiebung kontrollierbar ist. Eine HafniumdioxidSchicht 14 mit einer Brechzahl von 1,82 ist auf den Strahlteiler 3 aus Quarzglas 15 mit einer Brechzahl von 1,46 aufgebracht. Ein Strahl S1 trifft mit einem Einfallswinkel α von etwa 76,5° zur Flächennormalen der Fläche 61 auf eine Grenzfläche zwischen Quarzglas 15 und Hafniumdioxid-Schicht 14. Eine Schichtdicke 0 würde einer Phasenverschiebung für einen unbeschichteten Strahlteiler 3 entsprechen. Ein Einfallswinkel ß zur Flächennormale der Hafniumdioxid-Schicht 14 beträgt etwa 49,7°.

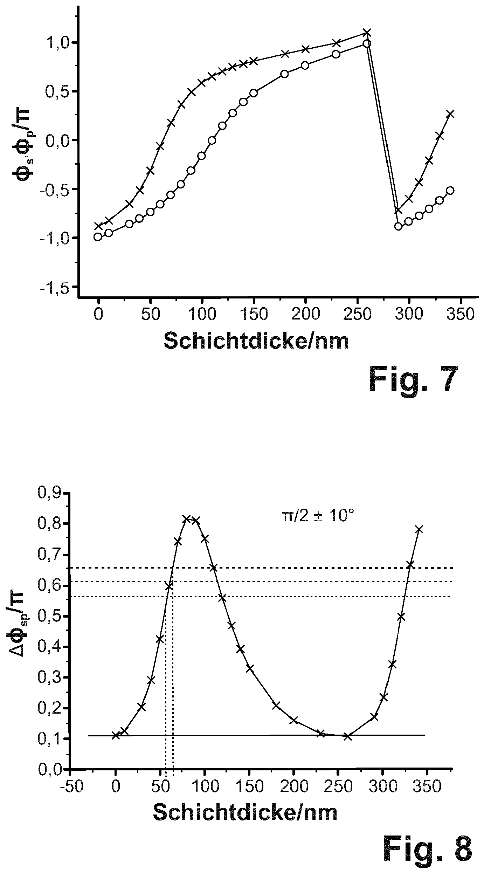

Zur gesamten Phasenverschiebung tragen mehrere Effekte bei. An einer Grenzfläche zwischen der Hafniumdioxid-Schicht 14 und Luft findet interne Totalreflexion statt, welche mit einer bestimmten Phasenverschiebung zwischen senkrecht und parallel polarisiertem (s- und p-polarisiertem) Licht behaftet ist. Dieser Strahl S1 interferiert mit an der Grenzfläche zwischen dem Strahlteiler 3 und der Hafniumdioxid-Schicht 14 reflektierten Anteilen und mit Anteilen, die mehrfach in der Hafniumdioxid-Schicht 14 reflektiert werden, und somit eine größere Phasenverschiebung akkumulieren. In Summe führt dies zu einer mit einer Dicke der Hafniumdioxid-Schicht 14 periodischen Modulation. Dies ist in Fig. 7 gezeigt. Aus Fig. 7 ist ersichtlich, dass mit einer Dicke der HafniumdioxidSchicht 14 von 60 nm oder 120 nm eine Phasenverschiebung von π/2 (entsprechend λ/4) erreicht wird. Durch eine Anpassung der Schichtdicke und/oder eines Schichtmaterials ist nahezu jede erwünschte Phasenverschiebung für beliebige Substratmaterialien und Einfallswinkel erreichbar.

Fig. 8 zeigt eine Phasenverschiebung für s- und p-polarisiertes Licht bei interner Totalreflexion an einer Grenzfläche eines mit einer Hafniumdioxid-Schicht 14 beschichteten Strahlteilers 3 aus Quarzglas und Luft. Ein Einfallswinkel des unterschiedlich polarisierten Lichtes beträgt etwa 76 ° zu einer Flächennormale des Strahlteilers 3. Bei den in Fig. 8 dargestellten Daten handelt es sich um simulierte Daten, welche halbanalytisch manuell verifiziert wurden.

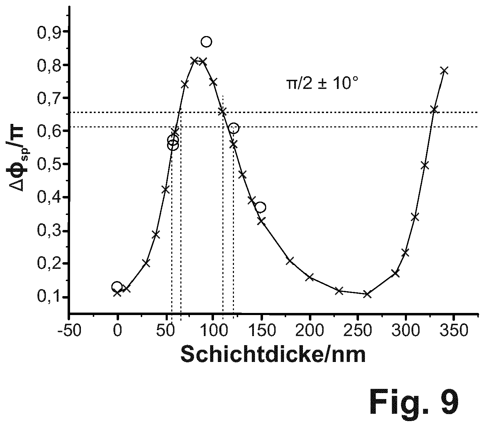

In Fig. 9 ist eine experimentelle Verifikation von simulierten Werten wie in Fig. 7 und 8 gezeigt. Für eine solche experimentelle Verifikation wurden Strahlteiler 3 aus Quarzglas 15 mit unterschiedlich dicken Hafniumdioxid-Schichten 14 beschichtet. Eine Dicke der Hafniumdioxid-Schichten 14 betrug etwa 58 nm, etwa 93 nm, etwa 121 nm und etwa 149 nm. Eine Phasenverschiebung zwischen s- und p-polarisiertem Licht wurde mit einem Testinterferometer vermessen. Fig. 9 zeigt einen Vergleich der theoretischen Werte gemäß Fig. 7 mit experimentellen Werten. Es ist ersichtlich, dass die experimentellen und theoretischen Werte sehr gut übereinstimmen.

Grundsätzlich hängen genaue Werte einer Phasenverschiebung sensitiv von einer Dicke einer Beschichtung und einem Einfallswinkel des Lichtes ab. Bei einer Anwendung des Referenzinterferometers 1 zur Quadraturdetektion ist eine exakte Phasenverschiebung von λ/4 nicht essenziell, eine Abweichung von ± λ/20 ist durchaus zulässig, sodass auch produktionstechnische Toleranzen keine Schwierigkeiten darstellen.

## Patentansprüche

1. Referenzinterferometer (1) zur Bestimmung einer optischen Weglängenänderung, insbesondere einer relativen optischen Weglängenänderung in Interferometerarmen (2), umfassend einen Strahlteiler (3) und eine Laserlichtquelle (4), **dadurch gekennzeichnet, dass** das Referenzinterferometer (1) derart ausgebildet ist, dass ein Lichtstrahl (5) der Laserlichtquelle (4) mittels totaler interner Reflexion über eine Oberseite (61) und eine Unterseite (62) des Strahlteilers (3) geführt ist, wobei zumindest die Oberseite (61) und/oder die Unterseite (62) des Strahlteilers (3) zumindest teilweise mit einer Beschichtung versehen sind, um über die gewählte Brechzahl und die Dicke der Beschichtung eine Phasenverschiebung zwischen x- und y-polarisiertem Licht des Lichtstrahls (5) zu erzielen.

2. Referenzinterferometer (1) nach Anspruch 1, **dadurch gekennzeichnet, dass** die Brechzahl und die Dicke der Beschichtung derart gewählt sind, dass bei einem mittels totaler interner Reflexion reflektierten Lichtstrahl (5) der Laserlichtquelle (4) eine Phasenverschiebung um λ/4 ± λ/10, vorzugsweise um λ/4 ± λ/20,erzielbar ist.

3. Referenzinterferometer (1) nach Anspruch 1 oder 2, **dadurch gekennzeichnet, dass** der Strahlteiler (3) als Parallelepiped, insbesondere als gerades Vierecksprisma, vorzugsweise als Quader, ausgebildet ist.

4. Referenzinterferometer (1) nach einem der Ansprüche 1 bis 3, **dadurch gekennzeichnet, dass** zumindest ein Detektor (7) vorgesehen ist.

5. Referenzinterferometer (1) nach einem der Ansprüche 1 bis 4, **dadurch gekennzeichnet, dass** die Laserlichtquelle (4) so positioniert ist, sodass der Lichtstrahl (5) in einem von 90° verschiedenen Winkel auf den Strahlteiler (3) trifft.

6. Referenzinterferometer (1) nach einem der Ansprüche 1 bis 5, **dadurch gekennzeichnet, dass** die Laserlichtquelle (4) ein Diodenlaser, insbesondere ein Distributed-Feedback-Laser, ein Distributed-Bragg-Reflector-Laser oder ein Vertical-Cavity Surface-Emitting-Laser ist.

7. Verwendung eines Referenzinterferometers (1) nach einem der Ansprüche 1 bis 6 zur Überprüfung einer optischen Weglängenänderung in Interferometerarmen (2).

8. Interferometer (8) mit einem Referenzinterferometer (1) nach einem der Ansprüche 1 bis 6 zur Überprüfung einer optischen Weglängenänderung in Interferometerarmen (2), umfassend eine Lichtquelle (9) für einen Messstrahl (10) und insbesondere mehrere optische Elemente.

9. Interferometer (8) nach Anspruch 8, **dadurch gekennzeichnet, dass** der Messstrahl (10) und der Lichtstrahl (5) der Laserlichtquelle (4) durch denselben Strahlteiler (3) führbar sind, wobei der Lichtstrahl (5) der Laserlichtquelle (4) einen Referenzstrahl darstellt.

10. Interferometer nach Anspruch 8 oder 9, **dadurch gekennzeichnet, dass** das Interferometer (8) als Zweistrahlinterferometer ausgebildet ist.

11. Interferometer nach einem der Ansprüche 8 bis 10, **dadurch gekennzeichnet, dass** das Referenzinterferometer (1) zur Quadraturdetektion ausgebildet ist.

12. Spektrometer, insbesondere Nah-Infrarot-Spektrometer, mit einem Interferometer (8) nach einem der Ansprüche 8 bis 11.

13. Verfahren zur Bestimmung einer optischen Weglängenänderung, insbesondere einer relativen optischen Weglängenänderung in Interferometerarmen (2), wobei von einer Laserlichtquelle (4) ein Lichtstrahl (5) als Referenzstrahl auf einen Strahlteiler (3) gestrahlt wird, **dadurch gekennzeichnet, dass** der Lichtstrahl (5) der Laserlichtquelle (4) als Referenzstrahl mittels totaler interner Reflexion über eine Oberseite (61) und eine Unterseite (62) des Strahlteilers (3) geführt wird, wobei zumindest die Oberseite (61) und/oder die Unterseite (62) des Strahlteilers (3) zumindest teilweise mit einer Beschichtung versehen sind, um über die gewählte Brechzahl und die Dicke der Beschichtung eine Phasenverschiebung zwischen x- und y-polarisiertem Licht des Lichtstrahls (5) zu erzielen.

14. Verfahren nach Anspruch 13, **dadurch gekennzeichnet, dass** zusätzlich ein Messstrahl (10) durch den denselben Strahlteiler (3) geführt wird.

15. Verfahren nach Anspruch 13 oder 14, **dadurch gekennzeichnet, dass** eine Polarisation des Referenzstrahls verändert wird.

16. Verfahren nach einem der Ansprüche 13 bis 15, **dadurch gekennzeichnet, dass** der Referenzstrahl und der Messstrahl (10) in unterschiedlichen Winkeln auf den Strahlteiler (3) geführt werden.

17. Verfahren nach einem der Ansprüche 13 bis 16, **dadurch gekennzeichnet, dass** der Referenzstrahl und der Messstrahl (10) von zumindest einem Detektor (7) erfasst werden.

## Claims

1. A reference interferometer (1) for determining an optical path length change, in particular a relative optical path length change in interferometer arms (2), comprising a beam splitter (3) and a laser light source (4), **characterised in that** the reference interferometer (1) is designed such that a light beam (5) of the laser light source (4) is guided by means of total internal reflection via an upper side (61) and a lower side (62) of the beam splitter (3), wherein at least the upper side (61) and/or the lower side (62) of the beam splitter (3) are at least partially provided with a coating in order to achieve a phase shift between xand y-polarised light of the light beam (5) via the selected refractive index and the thickness of the coating.

2. The reference interferometer (1) according to claim 1, **characterised in that** the refractive index and the thickness of the coating are selected such that a phase shift by λ/4 ± λ/10, preferably by λ/4 ± λ/20,can be achieved in a light beam (5) of the laser light source (4) reflected by means of total internal reflection.

3. The reference interferometer (1) according to claim 1 or 2, **characterised in that** the beam splitter (3) is designed as a parallelepiped, in particular as a straight quadrilateral prism, preferably as a cuboid.

4. The reference interferometer (1) according to any one of claims 1 to 3, **characterised in that** at least one detector (7) is provided.

5. The reference interferometer (1) according to any one of claims 1 to 4,
**characterised in that**
the laser light source (4) is positioned such that the light beam (5) impinges on the beam splitter (3) at an angle different from 90°.

6. The reference interferometer (1) according to any one of claims 1 to 5, **characterised in that** the laser light source (4) is a diode laser, in particular a distributed feedback laser, a distributed Bragg reflector laser or a vertical cavity surface-emitting laser.

7. The use of a reference interferometer (1) according to any one of claims 1 to 6 for checking an optical path length change in interferometer arms (2).

8. An interferometer (8) having a reference interferometer (1) according to any one of claims 1 to 6 for checking an optical path length change in interferometer arms (2), comprising a light source (9) for a measurement beam (10) and in particular multiple optical elements.

9. The interferometer (8) according to claim 8, **characterised in that** the measurement beam (10) and the light beam (5) of the laser light source (4) can be guided through the same beam splitter (3), wherein the light beam (5) of the laser light source (4) is a reference beam.

10. The interferometer according to claim 8 or 9, **characterised in that** the interferometer (8) is designed as a two-beam interferometer.

11. The interferometer according to any one of Claims 8 to 10, **characterised in that** the reference interferometer (1) is designed for quadrature detection.

12. A spectrometer, in particular a near-infrared spectrometer, having an interferometer (8) according to any one of claims 8 to 11.

13. A method for determining an optical path length change, in particular a relative optical path length change in interferometer arms (2), a light beam (5) being radiated as a reference beam from a laser light source (4) onto a beam splitter (3), **characterised in that** the light beam (5) of the laser light source (4) as a reference beam is guided by means of total internal reflection via an upper side (61) and a lower side (62) of the beam splitter (3), wherein at least the upper side (61) and/or the lower side (62) of the beam splitter (3) are at least partially provided with a coating in order to achieve a phase shift between x- and y-polarised light of the light beam (5) via the selected refractive index and the thickness of the coating.

14. The method according to claim 13, **characterised in that** a measurement beam (10) is additionally guided through the same beam splitter (3).

15. The method according to claim 13 or 14, **characterised in that** a polarisation of the reference beam is changed.

16. The method according to any one of claims 13 to 15, **characterised in that** the reference beam and the measurement beam (10) are guided onto the beam splitter (3) at different angles.

17. The method according to any one of claims 13 to 16, **characterised in that** the reference beam and the measurement beam (10) are detected by at least one detector (7).

## Revendications

1. Interféromètre de référence (1), destiné à déterminer une variation de la longueur d'un chemin optique, notamment une variation relative de la longueur d'un chemin optique dans des bras d'interféromètre (2), comprenant un séparateur de faisceau (3) et une source lumineuse laser (4), **caractérisé en ce que** l'interféromètre de référence (1) est conçu de telle sorte qu'un faisceau lumineux (5) de la source lumineuse laser (4) soit guidé au moyen d'une réflexion interne totale via une face supérieure (61) et une face inférieure (62) du séparateur de faisceau (3), au moins la face supérieure (61) et / ou la face inférieure (62) du séparateur de faisceau (3) étant munies au moins partiellement d'un revêtement, pour obtenir via l'indice de réfraction sélectionné un décalage de phase compris entre de la lumière polarisée x et y du faisceau lumineux (5).

2. Interféromètre de référence (1) selon la revendication 1, **caractérisé en ce que** l'indice de réfraction et l'épaisseur du revêtement sont sélectionnés de telle sorte, que dans le cas d'un faisceau lumineux (5) de la source lumineuse laser (4) réfléchi au moyen d'une réflexion interne totale, un décalage de phase de la valeur de λ/4 ± λ/10, de préférence de la valeur de λ/4 ± λ/20 puisse être obtenu.

3. Interféromètre de référence (1) selon la revendication 1 ou 2, **caractérisé en ce que** le séparateur de faisceau (3) est conçu sous la forme d'un parallélépipède, notamment sous la forme d'un prisme carré, de préférence, sous la forme d'un cuboïde.

4. Interféromètre de référence (1) selon l'une quelconque des revendications 1 à 3, **caractérisé en ce qu'**il est prévu au moins un détecteur (7).

5. Interféromètre de référence (1) selon l'une quelconque des revendications 1 à 4, **caractérisé en ce que** la source lumineuse laser (4) est positionnée de telle sorte, que le faisceau lumineux (5) soit incident sous un angle différent de 90° sur le séparateur de faisceau (3) .

6. Interféromètre de référence (1) selon l'une quelconque des revendications 1 à 5, **caractérisé en ce que** la source lumineuse laser (4) est un laser à diode, notamment un laser de type réflecteur de Bragg ou un laser à émission de surface en cavité verticale.

7. Utilisation d'un interféromètre de référence (1) selon l'une quelconque des revendications 1 à 6 pour vérifier une variation de longueur d'un chemin optique dans des bras d'interféromètre (2).

8. Interféromètre (8) doté d'un interféromètre de référence (1) selon l'une quelconque des revendications 1 à 6 pour vérifier une variation de la longueur d'un chemin optique dans des bras d'interféromètre (2), comprenant une source lumineuse (9) pour un faisceau de mesure (10) et notamment plusieurs éléments optiques.

9. Interféromètre (8) selon la revendication 8, **caractérisé en ce que** le faisceau de mesure (10) et le faisceau lumineux (5) de la source lumineuse laser (4) sont susceptibles d'être guidés à travers le même séparateur de faisceau (3), le faisceau lumineux (5) de la source lumineuse laser (4) constituant un faisceau de référence.

10. Interféromètre selon la revendication 8 ou 9, **caractérisé en ce que** l'interféromètre (8) est conçu sous la forme d'un interféromètre à deux faisceaux.

11. Interféromètre selon l'une quelconque des revendications 8 à 10, **caractérisé en ce que** l'interféromètre de référence (1) est conçu pour la détection en quadrature.

12. Spectromètre, spectromètre proche infrarouge, doté d'un interféromètre (8) selon l'une quelconque des revendications 8 à 11.

13. Procédé, destiné à déterminer une variation de la longueur d'un chemin optique, notamment une variation relative de la longueur d'un chemin optique dans des bras d'interféromètre (2), à partir d'une source lumineuse laser (4) étant émis faisceau lumineux (5) faisant office de faisceau de référence sur un séparateur de faisceau (3), **caractérisé en ce que** le faisceau lumineux (5) de la source lumineuse laser (4) est guidé en fonction de faisceau de référence au moyen d'un réflexion interne totale via une face supérieure (61) et une face inférieure (62) du séparateur de faisceau (3), au moins la face supérieure (61) et / ou la face inférieure (62) du séparateur de faisceau (3) étant munie au moins partiellement d'un revêtement, pour obtenir via l'indice de réfraction sélectionné et l'épaisseur du revêtement un décalage de phase compris entre de la lumière polarisée x et y du faisceau lumineux (5).

14. Procédé selon la revendication 13, **caractérisé en ce qu'**additionnellement, l'on guide un faisceau de mesure (10) à travers le même séparateur de faisceau (3).

15. Procédé selon la revendication 13 ou 14, **caractérisé en ce que** l'on fait varier une polarisation du faisceau de référence.

16. Procédé selon l'une quelconque des revendications 13 à 15, **caractérisé en ce que** l'on guide le faisceau de référence et le faisceau de mesure (10) sous des angles différents sur le séparateur de faisceau (3).

17. Procédé selon l'une quelconque des revendications 13 à 16, **caractérisé en ce que** le faisceau de référence et le faisceau de mesure (10) sont détectés par au moins un détecteur (7).
